# EUROPÄISCHE PATENTANMELDUNG

(11) **EP 2 727 702 A1**
(43) Veröffentlichungstag der Anmeldung: **07.05.2014**
(21) Anmeldenummer: 13189071.7
(22) Anmeldetag: 17.10.2013
(51) Int. Cl.: B29C 45/42, B25J 9/04

(54) **Spritzgusssystem**

(30) Priorität: 31.10.2012 DE 102012110440
(71) Anmelder: Waldorf Technik GmbH & Co. KG, 78234 Engen (DE)
(72) Erfinder: Czizegg, Wolfgang, 78256 Steisslingen (DE); Fuhrmann, Ralf, 78234 Engen (DE)
(74) Vertreter: Wagner, Kilian

(57) **Zusammenfassung**

Die Erfindung betrifft ein Spritzgusssystem, mit einer Spritzgussvorrichtung (2) umfassend eine mindestens eine Kavität begrenzende erste Teilform (4) und eine entlang von Führungsholmen (5) relativ zu der ersten Teilform (4) zum Öffnen und Schließen der mindestens einen Kavität verstellbare und die mindestens eine Kavität begrenzende zweite Teilform sowie mit Entnahmemitteln (3) zum Entnehmen mindestens eines Spritzgussteils.

## Beschreibung

Die Erfindung betrifft eine Spritzgusssystem gemäß dem Oberbegriff des Anspruchs 1, mit einer Spritzgussvorrichtung, umfassend eine mindestens eine Kavität begrenzende erste Teilform und eine entlang von Führungs-holmen, insbesondere translatorisch, relativ zu der ersten Teilform zum Öffnen und Schließen der mindestens einen Kavität verstellbare und die mindestens eine Kavität begrenzende, zweite Teilform sowie mit Entnahmemitteln zum Entnehmen mindestens eines Spritzgussteils aus der ersten oder zweiten Teilform, wobei die Entnahmemittel einen Entnahmearm umfassen, der in einer Schwenkbewegung zwischen einer axial zwischen den geöffneten Teilformen angeordneten Entnahmeposition und einer Parkposition außerhalb der Teilformen mit Hilfe von Antriebsmitteln verschwenkbar angeordnet ist.

Bekannt sind Spritzgusssysteme, bei denen ein Entnahmearm, beispielsweise pneumatisch, translatorisch zwischen einer zwischen zwei geöffneten Teilformen angeordneten Entnahmeposition und einer außerhalb der geöffneten Teilformen angeordneten Parkposition verstellbar ist. Derartige Spritzgusssysteme haben sich bewährt, weisen jedoch gleichzeitig den Nachteil eines vergleichsweise großen Platzbedarfs auf.

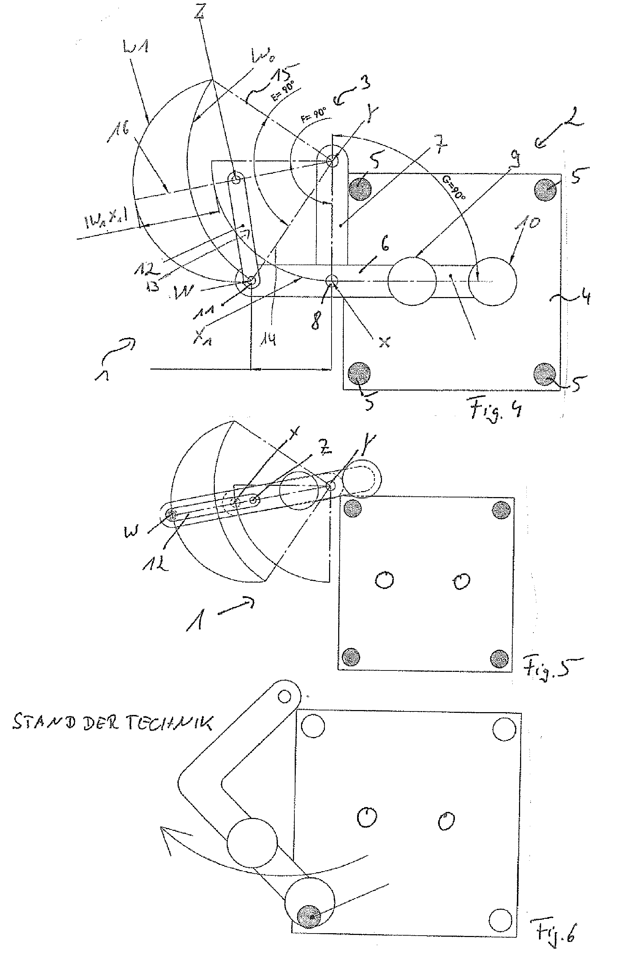

Neben diesen Spritzgusssystemen mit translatorisch arbeitenden Entnahmemitteln sind Spritzgusssysteme wie in Fig. 6 gezeigt bekannt geworden. Diese zeichnen sich durch einen L-förmigen Entnahmearm aus, der auf einer Kreisbahn um eine Drehachse verschwenkbar ist. Solche Entnahmemittel sind hinsichtlich ihres Platzbedarfs optimiert. Problematisch wird deren Einsatz jedoch dann, wenn vergleichsweise große Spritzgussteile und/oder mehrere nebeneinander angeordnete Spritzgussteile gleichzeitig entnommen werden müssen, da in diesem Fall der Entnahmearm, wie in Fig. 6 dargestellt, mit einem Führungsholm für die verstellbare Teilform kollidieren würde. Daher haben sich verschwenkbare Entnahmearme nur für Spritzgussvorrichtungen mit vergleichsweise kleinen Spritzgussteilen durchgesetzt oder für Spritzgussvorrichtungen, bei denen nicht mehrere, insbesondere vergleichsweise große nebeneinander angeordnete Kavitäten gleichzeitig bedient werden müssen.

Aus der DE 89 05 910 U1 ist eine Entnahmevorrichtung bekannt, bei welcher eine angetriebene Schwinge endseitig an einem Entnahmearm angelenkt ist. Es ist eine Stützschwinge vorgesehen, die zwischen Entnahmemitteln und dem ersten Schwenkgelenk angeordnet ist. Dies gilt auch für die aus der DE 2147436 A1 sowie der DE 10022627A1 bekannte Konfiguration. Als Nachteilig bei dem bekannten Stand der Technik ist die wenig robuste Ausführung der Entnahmevorrichtung sowie die geringe Entnahmegeschwindigkeit.

Ausgehend von dem vorgenannten Stand der Technik liegt der Erfindung die Aufgabe zugrunde, ein bauraum-optimiertes Spritzgusssystem mit entsprechend verbesserten Entnahmemitteln anzugeben, die geeignet und bestimmt sind, um vergleichsweise große Spritzgussteile und/oder gleichzeitig mehrere nebeneinander angeordnete Spritzgussteile zu entnehmen, ohne dass eine Kollisionsgefahr mit den Führungsholmen für die verstellbare Teilform resultiert, wobei das Spritzgusssystem eine kurze Entnahmezeit garantieren soll.

Diese Aufgabe wird mit den Merkmalen des Anspruchs 1 gelöst. Vorteilhafte Weiterbildungen sind in den Unteransprüchen angegeben.

In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, einem, bevorzugt im Gegensatz zum Stand der Technik geraden Entnahmearm eine um eine, bevorzugt ortsfeste, erste Schwingendrehachse verschwenkbare erste Schwinge zuzuordnen, und diese über ein erstes Gelenk an dem Entnahmearm anzulenken, wobei das erste Gelenk eine erste Entnahmearmdrehachse definiert, um die der Entnahmearm bei einer Entnahmebewegung relativ zur ersten Schwingendrehachse verschwenkbar ist. Als weitere Maßnahme sind dem Entnahmearm erfindungsgemäß Kompensationsmittel zugeordnet, die den Entnahmearm auf eine Bewegungsbahn zwingen, die eine Kollision des Entnahmearms oder des mindestens einen entnommenen Spritzgussteils mit den Führungsholmen sicher verhindert, was weiter erfindungsgemäß dadurch erreicht wird, dass die Kompensationsmittel so ausgebildet sind, dass sich ein von dem Entnahmearm und der ersten Schwinge aufgespannter Winkel während der Verschwenkbewegung des Entnahmearms zwischen der Parkposition und der Entnahmeposition verändert, insbesondere zunächst verkleinert und dann wieder vergrößert. Im Gegensatz zum Stand der Technik bewegt sich somit der Entnahmearm nicht in einer Gesamtheit starr um eine einzige Drehachse, sondern der Entnahmearm wird durch das Vorsehen der Kompensationsmittel während der Verschwenkbewegung der ersten Schwinge um die erste Schwingendrehachse um die erste Entnahmedrehachse ausgelenkt, so dass sich der von der ersten Schwinge und dem Entnahmearm aufgespannte Winkel verändert, und somit eine Kollision mit der Störkontur der Spritzgussvorrichtung vermieden wird. Wie später noch erläutert werden wird, entspricht vorgenannter Winkel in der Parkposition dem entsprechenden Winkel in der Entnahmeposition. Noch weiter bevorzugt beträgt der Winkel in beiden Endpositionen der Verschwenkbewegung 90°, wobei es noch weiter bevorzugt ist, wenn der Entnahmearm in der Entnahmeposition horizontal und in der Parkposition vertikal ausgerichtet ist.

Das erfindungsgemäße Spritzgusssystem zeichnet sich aufgrund der verschwenkbaren Anordnung des Entnahmearms relativ zu einer um eine erste Schwingendrehachse verschwenkbaren ersten Schwinge und des Vorsehens der für eine Verschwenkung des Entnahmearms relativ zu der ersten Schwinge Sorge tragenden Kompensationsmittel aus durch einen geringen Bauraumbedarf bei gleichzeitiger Eröffnung der Möglichkeit der Entnahme vergleichsweise großer Spritzgussteile und/oder der gleichzeitigen Entnahme von nebeneinander angeordneten, insbesondere vergleichsweise großen Spritzgussteilen aus, ohne dass die Gefahr einer Kollision mit den Führungsholmen für die verschwenkbare Teilform besteht.

Um in konstruktiv einfacher Weise eine Verschwenkung des Entnahmearms relativ zu der ersten Schwinge zu ermöglichen, ist erfindungsgemäß der Erfindung vorgesehen, dass der Entnahmearm um eine zweite Entnahmearmdrehachse relativ zu den Mitteln schwenkbar angeordnet ist, wobei die zweite Entnahmearmdrehachse, vorzugsweise entlang der Längserstreckung des Entnahmearms von der ersten Drehachse beabstandet ist. Bevorzugt befindet sich die zweite Entnahmearmdrehachse in einem in der Entnahmeposition von der Spritzgussvorrichtung bzw. den Teilformen abgewandten Endbereich des Entnahmearms.

An dem Entnahmearm sind Haltemittel vorgesehen, beispielsweise in Form von Saugnäpfen oder mechanischen Greifern, um das mindestens eine Spritzgussteil während der Verschwenkbewegung zu halten. Besonders zweckmäßig ist es, um den Vorteil eines erfindungsgemäßen Spritzgusssystems optimal auszunutzen, wenn mindestens zwei derartige Haltemittel für mindestens zwei unterschiedliche Spritzgussteile entlang der Längserstreckung des Entnahmearms beabstandet sind.

Erfindungsgemäß ist vorgesehen, dass die erste Entnahmedrehachse entlang des Entnahmearms zwischen der zweiten Entnahmedrehachse und den Haltemitteln angeordnet ist. Hieraus resultiert der überraschende Vorteil, dass durch eine nur geringe Verdrehbewegung der Schwinge mittels eines Antriebs ein kompletter Entnahmevorgang realisiert werden kann. Das führt zu einer deutlichen Verkürzung der Entnahmezeit bzw. Erhöhung der Entnahmegeschwindigkeit. So ist es beispielsweise möglich und bevorzugt, durch die Realisierung eines Schwenkwinkels von nur 90° eine Entnahme bzw. eine vollständige Verschwenkbewegung der an dem Entnahmearm angeordneten Haltemittel zu ermöglichen, wodurch der Entnahmevorgang wesentlich beschleunigt werden kann. Darüber hinaus wird aufgrund der Anordnung der zweiten Entnahmedrehachse endseitig am Entnahmearm ein besonders robustes und System erhalten, da der Entnahmearm mit maximalem Abstand zu den Haltemitteln gestützt wird und somit größte Drehmomente aufgenommen werden kann.

Im Stand der Technik ist die angetriebene Schwinge immer endseitig am Entnahmearm angeordnet, was zu den notwendigen großen Schwenkwinkeln mit dem daraus resultierenden Nachteilen führt.

Bevorzugt dienen die Mittel als Führungsmittel, die den Entnahmearm derart fangen, dass dieser im Bereich der zweiten Entnahmearmdrehachse bzw. dass die zweite Entnahmearmdrehachse während der Verschwenkbewegung des Entnahmearms zwischen der Parkposition und der Entnahmeposition eine, bevorzugt jedoch nicht zwingend teilkreisförmige, Bahn beschreibt, die nicht parallel zu einer Bahn verläuft, die von der ersten Entnahmearmdrehachse während dieser Verschwenkbewegung beschrieben wird, um somit die Relativverschwenkung zwischen Entnahmearm und erster Schwinge zu erzwingen.

Im Hinblick auf die konkrete Ausgestaltung der Mittel gibt es unterschiedliche Möglichkeiten. So ist es beispielsweise denkbar, dass die Mittel eine Führungskulisse umfassen, in welcher der Entnahmearm mittelbar oder unmittelbar gefangen ist und bei seiner Bewegung entlang der Führungskulisse um die zweite Entnahmedrehachse verschwenkt wird. Alternativ, und bevorzugt weil robuster, ist eine Ausführungsform der Mittel, bei der diese eine zweite Schwinge umfassen, die bevorzugt in der Entnahmeposition des Entnahmearms mit der ersten Schwinge einen Winkel einschließt.

Die zweite Schwinge ist weiterbildungsgemäß über ein die vorgenannte zweite Entnahmedrehachse definierendes Drehgelenk gelenkig mit dem Entnahmearm verbunden, so dass die erste Drehachse auf einer ersten Teilkreisbahn um die erste Schwingendrehachse und die zweite Entnahmearmdrehachse auf einer bevorzugt zur ersten Teilkreisbahn nicht parallelen und/oder konzentrischen Teilkreisbahn um die zweite, bevorzugt ortfeste Schwingendrehachse verschwenkt wird, derart dass eine Relativverschwenkbewegung zwischen der ersten Schwinge und dem Entnahmearm resultiert.

Die vorerwähnte zweite Schwingendrehachse ist sowohl von der zweiten Entnahmearmdrehachse sowie von der ersten Schwingendrehachse beabstandet.

Wie eingangs erwähnt, ist es besonders bevorzugt, wenn die Mittel derart ausgebildet sind, dass der Winkel zwischen der ersten Schwinge und dem Entnahmearm sowohl in der Entnahmeposition als auch in der Parkposition 90° beträgt und noch weiter bevorzugt während der Überführbewegung kleiner ist als 90°.

Um ein zu jeder Zeit bestimmtes Schwingsystem zu erhalten, welches immer eine definierte Bewegung vollführt, ist es weiterbildungsgemäß zweckmäßig, wenn zu jeder Zeit die zweite Schwingenarmdrehachse, die erste Schwingenarmdrehachse und die zweite Entnahmearmdrehachse die Eckpunkte eines gedachten Dreiecks bilden und somit nicht auf einer gemeinsam gedachten Linie angeordnet sind.

Um eine Überführung des mindestens einen Spritzgussteils, vorzugsweise der mehreren Spritzgussteile, aus einer der Teilformen, insbesondere der ersten Teilform hin zu dem Entnahmearm zu ermöglichen, sind Entnahmemittel vorgesehen, die ein Entnahmehub des mindestens einen Spritzgussteils, vorzugsweise parallel zu translatorischen Verstellbewegung der zweiten Teilform bewirken. So ist es beispielsweise möglich, als Entnahmemittel Blasmittel vorzugeben, die an der Spritzgussvorrichtung angeordnet sind und die die gespritzten Teile in Richtung Entnahmearm blasen. Zusätzlich oder alternativ können Entnahmemittel am Entnahmearm vorgesehen sein, die bevorzugt in der Entnahmeposition des Entnahmearms, weiter bevorzugt translatorisch in Richtung Spritzgussteil verstellbar sind, um dieses aus einer der Teilformen zu entnehmen und in Richtung Entnahmearm zu überführen.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: ein Ausführungsbeispiel eines erfindungsgemäßen Spritzgusssystems, bei welchem ein Entnahmearm in einer Entnahmeposition zwischen zwei Teilformen einer Spritzgussvorrichtung angeordnet ist,
- Fig. 2: das Spritzgusssystem gemäß Fig. 1 während einer Entnahmebewegung bzw. Verschwenkbewegung des Entnahmearms,
- Fig. 3: das Spritzgusssystem gemäß den Fig. 1 und 2, in einer Parkposition des Entnahmearms außerhalb der Spritzgussvorrichtung,
- Fig. 4: eine Ausführungsform eines erfindungsgemäßen Spritzgusssystems mit Darstellung unterschiedlicher Bewegungsbahnen.
- Fig. 5: ein Spritzgusssystem mit unbestimmt arbeitenden Entnahmemitteln, und
- Fig. 6: ein Spritzgusssystem nach dem Stand der Technik.

In den Figuren sind gleiche Elemente und Elemente mit der gleichen Funktion mit den gleichen Bezugszeichen gekennzeichnet.

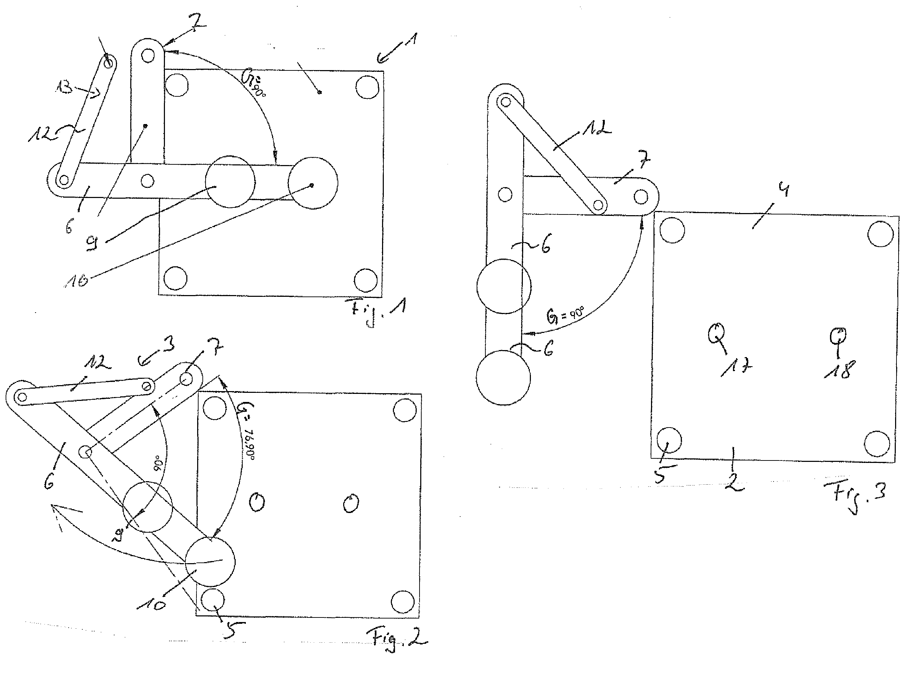

Zunächst wird anhand von Fig. 4 der grundsätzliche Aufbau einer bevorzugten Ausführungsform eines erfindungsgemäßen Spritzgusssystems 1 erläutert, woraufhin dann unter Bezugnahme auf die Fig. 1 bis 3 weiter auf den Bewegungsablauf eingegangen wird.

Fig. 4 zeigt, wie erwähnt, ein Spritzgusssystem 1 mit einer Spritzgussvorrichtung 2 und Entnahmemitteln 3, die in dem gezeigten Ausführungsbeispiel zur gleichzeitigen Entnahme von zwei beabstandeten Spritzgussteilen ausgebildet sind. Die Spritzgussvorrichtung 2 umfasst zwei Teilformen, nämlich eine dargestellte erste Teilform 4, in der zwei Teilkavitäten ausgebildet sind und eine zweite, nicht dargestellte Teilform, die senkrecht zur Zeichnungsebene entlang von vier Führungsholmen 5 translatorisch relativ zur ersten Teilform 4 in an sich bekannter Weise verstellbar ist.

Die Entnahmemittel 3 umfassen einen geraden Entnahmearm 6, der zwischen der in Fig. 4 dargestellten Entnahmeposition, in welcher der Entnahmearm 6 zwischen die axial beabstandeten Teilformen eingreift, um Spritzgussteile aus den Kavitäten zu entnehmen und einer Parkposition außerhalb der Teilformen verschwenkbar ist.

Zu diesem Zweck ist dem Entnahmearm 6 eine erste Schwinge 7 zugeordnet, die mittels eines nicht dargestellten Antriebs um eine erste, ortsfeste Schwingendrehachse Y verschwenkbar ist. Die erste Schwinge 7 ist gelenkig über ein erstes Gelenk 8 mit dem Entnahmearm 6 verbunden, wobei die erste Schwinge 7 und der Entnahmearm 6 in der Entnahmeposition einen Winkel G von in dem gezeigten Ausführungsbeispiel 90° aufspannen.

In der Zeichnungsebene rechts von dem ersten Gelenk 8, welches eine erste Entnahmedrehachse X definiert, sind zwei Haltemittel 9, 10 angeordnet und in Richtung der Längserstreckung des Entnahmearms 6 beabstandet zur gleichzeitigen Entnahme von zwei Spritzgussteilen aus zwei Teilkavitäten der ersten Teilform 4. Bevorzugt sind die Haltemittel 9, 10 Teil von nicht dargestellten Entnahmemitteln, die bevorzugt translatorisch entlang der Längserstreckung der Führungsholme 5, beispielsweise pneumatisch oder elektromotorisch relativ zu dem Entnahmearm 6 verstellbar sind.

Auf der von den Haltemitteln 9, 10 abgewandten Seite in einem von der Spritzgussvorrichtung 2 abgewandten Endbereich des Entnahmearms 6 ist dem Entnahmearm 6 eine zweite Entnahmearmdrehachse W zugeordnet, die in dem gezeigten Ausführungsbeispiel von einem zweiten Gelenk 11 gebildet ist, über das eine zweite Schwinge 12 gelenkig mit dem Dreharm 6 verbunden ist. Die erste Entnahmearmdrehachse X ist also bezogen auf die Längserstreckung des Entnahmearms 6 axial zwischen dem zweiten Entnahmearm, der Entnahmearmdrehachse W und den Haltemitteln 9, 10 angeordnet.

Die zweite Schwinge 12 ist um eine zweite Schwingendrehachse Z verschwenkbar angeordnet, welche ortsfest angeordnet ist und zwar mit Abstand zur ersten Schwingendrehachse Y, welcher bevorzugt Antriebsmittel zur Betätigung der Entnahmemittel zugeordnet sind.

An dieser Stelle sei erwähnt, dass nicht zwingend eine zweite Schwinge 12 vorgesehen sein muss. Diese kann auch ersetzt werden durch eine Führungskulisse zur Führung des Schwingarms 7 im Bereich der zweiten Entnahmearmdrehachse W. Diese Führungskulisse oder die dargestellte zweite Schwinge 12 sind Teil von Mitteln 13 (Kompensationsmittel), die bei einer Verstellbewegung des Entnahmearms 6 zwischen der Entnahmeposition und der Parkposition dafür Sorge tragen, dass der Entnahmearm 6 relativ zu der ersten Schwinge 7 um die erste Entnahmearmdrehachse X verschwenkt, wodurch sich während der Verschwenkbewegung der Winkel G ändert, insbesondere um in den Endlagen wieder das gleiche Maß, bevorzugt 90°, einzunehmen.

Während der vorgenannten Verschwenkbewegung des Entnahmearms 6 zwischen den Endpositionen beschreibt, die zweite Entnahmearmdrehachse W eine Bewegungsbahn W1, die aufgrund des Vorsehens der Schwinge 12 als Teilkreisbahn ausgebildet ist. Bei einer Führungskulisse muss die Bahn, was jedoch bevorzugt wäre, nicht zwingend als Teilkreisbahn ausgeführt sein.

Gleichzeitig verschwenkt die erste Entnahmearmdrehachse X um eine Bahn X1, die in dem gezeigten Ausführungsbeispiel aufgrund der ersten Schwinge 7 ebenfalls teilkreisförmig ist. Die Bahnen W1 und X1 verlaufen nicht parallel.

Lediglich zur Veranschaulichung des Unterscheidens zum Stand der Technik ist auch eine hier nicht relevante Bewegungsbahn W0 eingezeichnet, die parallel zur Bewegungsbahn X1 verläuft, und auf welcher ein hier von der zweiten Entnahmedrehachse W definierter Punkt des Entnahmearms 6 im Stand der Technik wandern würde, wenn keine Mittel 13 vorgesehen wären und die erste Schwinge 7 drehfest oder einstückig mit dem Entnahmearm 6 verbunden bzw. ausgebildet wäre. Durch die Mittel 13 wir die Bahn des Entnahmearms 6 so kompensiert bzw. korrigiert, dass eine Kollision mit den Führungsholmen 5 vermieden wird.

Zu erkennen ist, dass in der Entnahmeposition eine Verbindungslinie zwischen der zweiten Entnahmearmdrehachse W und der ersten Schwingendrehachse Y und eine Verbindungslinie 15 zwischen der ersten Schwingendrehachse und der zweiten Entnahmearmdrehachse W in der Entnahmeposition einen Winkel E, in dem gezeigten Ausführungsbeispiel von 90°, einschließen, wobei sich die zweite Schwingendrehachse Z mit Abstand zur ersten Schwingendrehachse Y auf einer Winkelhalbierenden 16 dieses Winkels E befindet.

Zu erkennen ist, dass die Drehachsen Z, W und Y zu jedem Zeitpunkt der Verschwenkbewegung des Entnahmearms 6 zwischen den Endpositionen ein Dreieck begrenzen, so dass das System bestimmt ist. Dies ergibt sich auch daraus, dass im Totpunkt der zweiten Schwinge 12 der Abstand zwischen den Bahnen W1 und X1 kleiner ist als der Abstand der ersten und zweiten Entnahmearmdrehachse X, W.

Ein entsprechender Grenzfall, bei welchem vorgenannte Bedingung nicht eingehalten wird, ist in Fig. 5 gezeigt. Hier befinden sich im Totpunkt der zweiten Schwinge 12 die Achsen W, Z und Y auf einer Linie.

Im Folgenden wird der Bewegungsablauf anhand der Figuren 1 bis 3 erläutert, wobei bezüglich der Benennung der Einzelteile auf Fig. 4 mit zugehöriger Figurenbeschreibung verwiesen wird.

Fig. 1 zeigt nun eine Spritzgusseinrichtung 1, bei welcher der Entnahmearm 6 horizontal ausgerichtet ist und sich in einer Entnahmeposition zwischen den Teilformen befindet. Der Winkel G zwischen der ersten Schwinge 7 und dem Entnahmearm 6 beträgt 90°.

In Fig. 3 ist der Entnahmearm 6 in einer Entnahmeposition außerhalb der Spritzgussvorrichtung 2 gezeigt. Zu erkennen ist, dass der Entnahmearm 6 vertikal orientiert ist und der Winkel G zwischen der ersten Schwinge 7 und dem Entnahmearm 6 (wieder) 90° beträgt. In Fig. 3 ist auch die erste Teilform 4 vollständig zu sehen mit ihren Teilkavitäten 17, 18, aus denen gleichzeitig Spritzgussteile mit Hilfe des Entnahmearms 6 entnommen werden können. Die Teilkavitäten 17, 18 bilden zusammen mit der nicht dargestellten zweiten Teilform, die senkrecht zur Zeichnungsebene verstellbar ist und zwar translatorisch Entlang der Führungsräume 5, jeweils eine Kavität.

In Fig. 2 ist ein Zustand der Entnahmemittel 3 während der Verschwenkbewegung gezeigt. Zu erkennen ist, dass der Winkel G zwischen der ersten Schwinge 7 und dem Entnahmearm 6 zum gezeigten Zeitpunkt 76,90° beträgt und kleiner ist als zu Beginn und am Ende der Verschwenkbewegung. Zu erkennen ist auch, dass der Entnahmearm 6 derart weiter nach in der Zeichnungsebene links ausgelenkt wird, dass die Haltemittel 9, 10 und auch der Entnahmearm 6 selbst nicht mit den Führungsholmen 5 kollidieren. Der in Fig. 2 eingezeichnete Winkel von 90° stellt die Situation im Stand der Technik dar, ohne erste und zweite Schwinge und mit starrem, rechtwinkligem Entnahmearm.

### Bezugszeichenliste

- 1: Spritzgusssystem
- 2: Spritzgussvorrichtung
- 3: Entnahmemittel
- 4: erste Teilform
- 5: Führungsholme
- 6: Entnahmearm
- 7: erste Schwinge
- 8: erstes Gelenk
- 9: Haltemittel
- 10: Haltemittel
- 11: zweites Gelenk
- 12: zweite Schwinge
- 13: Mittel
- 14: erste Verbindungslinie
- 15: zweite Verbindungslinie
- 16: Winkelhalbierende
- 17: Teilkavität
- 18: Teilkavität

- X: erste Entnahmearmdrehachse
- W: zweite Entnahmearmdrehachse
- Y: erste Schwingendrehachse
- Z: zweite Schwingendrehachse
- G: Winkel zwischen erster Schwinge und Entnahmearm
- W: Winkel zwischen Verbindungslinien 14, 15
- W1: Bahn von zweiter Entnahmearmdrehachse
- X1: Bahn von erster Entnahmearmdrehachse

## Patentansprüche

1. Spritzgusssystem, mit einer Spritzgussvorrichtung (2) umfassend eine mindestens eine Kavität begrenzende erste Teilform (4) und eine entlang von Führungsholmen (5) relativ zu der ersten Teilform (4) zum Öffnen und Schließen der mindestens einen Kavität verstellbare und die mindestens eine Kavität begrenzende zweite Teilform sowie mit Entnahmemitteln (3) zum Entnehmen mindestens eines Spritzgussteils, wobei die Entnahmemittel (3) einen Entnahmearm (6) umfassen, der in einer Schwenkbewegung zwischen einer axial zwischen den geöffneten Teilformen angeordneten Entnahmeposition und einer Parkposition außerhalb der Teilformen mit Hilfe von Antriebsmitteln verschwenkbar angeordnet ist, wobei dem Entnahmearm (6) eine um eine erste Schwingendrehachse (Y) verschwenkbare erste Schwinge (7) zugeordnet ist, die mit dem Entnahmearm (6) einen Winkel (G) aufspannt und die mit dem Entnahmearm (6) über ein eine erste Entnahmearmdrehachse (X) definierendes erstes Gelenk (8) gelenkig verbunden ist, und dass dem Entnahmearm (6) Mittel (13) zugeordnet sind, die derart ausgebildet und angeordnet sind, dass sich der Winkel (G) während der Verschwenkbewegung des Entnahmearms (6) zwischen der Parkposition und der Entnahmeposition verändert, und wobei der Entnahmearm (6) relativ zu den Mitteln (13) um eine zweite Entnahmearmdrehachse (W) verschwenkbar ist, die zu der ersten Entnahmearmdrehachse beabstandet ist, und wobei an dem Entnahmearm (6) Haltemittel (9, 10) zum Halten des mindestens einen Spritzgussteils vorgesehen sind, insbesondere mindestens zwei entlang der Längserstreckung des Entnahmearms (6) beabstandete Haltemittel (9,10) für mehrere Spritzgussteile,
**dadurch gekennzeichnet,**
**dass** die erste Entnahmearmdrehachse (X) entlang des Entnahmearms (6) zwischen der zweiten Entnahmearmdrehachse (W) und den Haltemitteln (9, 10) angeordnet ist.

2. Spritzgusssystem nach Anspruch 1,
**dadurch gekennzeichnet,**
**dass** die Mittel (13) derart ausgebildet sind, dass die zweite Entnahmearmdrehachse (W) während der Verschwenkbewegung des Entnahmearms (6) zwischen der Parkposition und der Entnahmeposition eine Bahn beschreibt, die nicht parallel zu einer Bahn verläuft, die von der ersten Entnahmearmdrehachse (X) während der Verschwenkbewegung beschrieben wird.

3. Spritzgusssystem nach einem der vorhergehenden Ansprüche, **dadurch gekennzeichnet**,
die Mittel (13) eine zweite Schwinge (12) umfassen, die über ein die zweite Entnahmearmdrehachse (W) definierendes Gelenk gelenkig mit dem Entnahmearm (6) verbunden ist, oder dass die Mittel (13) eine Führungskulisse umfassen, entlang derer der Schwingarm um die zweite Entnahmearmdrehachse (W) verschwenkbar verstellbar ist.

4. Spritzgusssystem nach Anspruch 3,
**dadurch gekennzeichnet,**
**dass** die zweite Schwinge (12) um eine zweite Schwingendrehachse (Z) verschwenkbar ist, die von der zweiten Entnahmearmdrehachse (W) sowie von der ersten Schwingendrehachse (Y) beabstandet ist.

5. Spritzgusssystem nach einem der vorhergehenden Ansprüche, **dadurch gekennzeichnet,**
**dass** die Mittel derart ausgebildet sind, dass der Winkel (G) in der Entnahmeposition und/oder der Parkposition 90° beträgt.

6. Spritzgusssystem nach einem der vorhergehenden Ansprüche, **dadurch gekennzeichnet,**
**dass** die Mittel (13) derart ausgebildet sind, dass die zweite Schwingenarmdrehachse (Z), die erste Schwingenarmdrehachse (X) und die zweite Entnahmearmdrehachse (W) zu jeder Zeit während der Verschwenkbewegung als auch in der Park- und Entnahmepostion nicht auf einer gedachten Linie liegen.

7. Spritzgusssystem nach einem der vorhergehenden Ansprüche, **dadurch gekennzeichnet,**
**dass** eine gedachte erste Verbindungslinie (14) zwischen der zweiten Entnahmearmdrehachse (W) und der ersten Schwingendrehachse (Y) in der Parkposition und eine gedachte zweite Verbindunglinie (15) zwischen der zweiten Entnahmearmdrehachse (W) und der ersten Schwingendrehachse (Y) in der Entnahmeposition einen Winkel (E), vorzugsweise von 90°, aufspannen und dass die zweite Schwingendrehachse (Z) auf einer Winkelhalbierenden (16) des Winkels (E) mit Abstand zur ersten Schwingendrehachse (Y) angeordnet ist.

8. Spritzgusssystem nach einem der vorhergehenden Ansprüche, **dadurch gekennzeichnet,**
**dass** dem Entnahmearm (6) am Entnahmearm (6) und/oder an der Spritzgussvorrichtung (2) angeordnete Entnahmemittel (3) zugeordnet sind, mit denen das mindestens eine Spritzgussteil einen Entnahmehub, insbesondere parallel zur translatorischen Verstellbewegung der zweiten Teilform vollführen kann.
